## Europäisches Patentamt
## European Patent Office
## Office européen des brevets

(19)

(11) Veröffentlichungsnummer: **0 015 501**
**B1**

(12) **EUROPÄISCHE PATENTSCHRIFT**

(45) Veröffentlichungstag der Patentschrift:
**26.08.81**

(21) Anmeldenummer: **80100979.6**

(22) Anmeldetag: **27.02.80**

(51) Int. Cl.³: **H 02 P 1/26**, H 02 P 7/44

(54) **Startvorrichtung für die feldorientierte Steuerung oder Regelung einer Asynchronmaschine.**

(30) Priorität: **28.02.79 JP 23062/79**

(43) Veröffentlichungstag der Anmeldung:
**17.09.80 Patentblatt 80/19**

(45) Bekanntmachung des Hinweises auf die Patenterteilung:
**26.08.81 Patentblatt 81/34**

(84) Benannte Vertragsstaaten:
**AT BE CH DE FR GB IT NL SE**

(56) Entgegenhaltungen:
**1. DE-B2-2 106 789**
**2. DE-C-1 941 312**

(73) Patentinhaber: **FUJI ELECTRIC CO. LTD., 1-1, Tanabeshinden, Kawasaki-ku, Kawasaki 210 (JP)**

(72) Erfinder: **Yanase, Takao, Dipl.-Ing., 2-7-10 Yabe, Sagamihara-shi Kanagawa (JP)**
Erfinder: **Nakahara, Kazuhito, Dipl.-Ing., 1-27-13 Fujimoto, Kokubunji-shi Tokyo (JP)**

(74) Vertreter: **Mehl, Ernst, Dipl.-Ing. et al, Postfach 22 01 76, D-8000 München 22 (DE)**

ACTORUM AG.

## Startvorrichtung für die feldorientierte Steuerung oder Regelung einer Asynchronmaschine

Die Erfindung betrifft eine Startvorrichtung für die Steuerung oder Regelung einer Asynchronmaschine, bei der die Ständerstromwicklung von einem steuerbaren Stromrichter gespeist ist und die Steuerung oder Regelung eine Flusserfassungseinrichtung und einen Koordinatenwandler enthält, wie sie im Oberbegriff des Anspruches 1 angegeben sind.

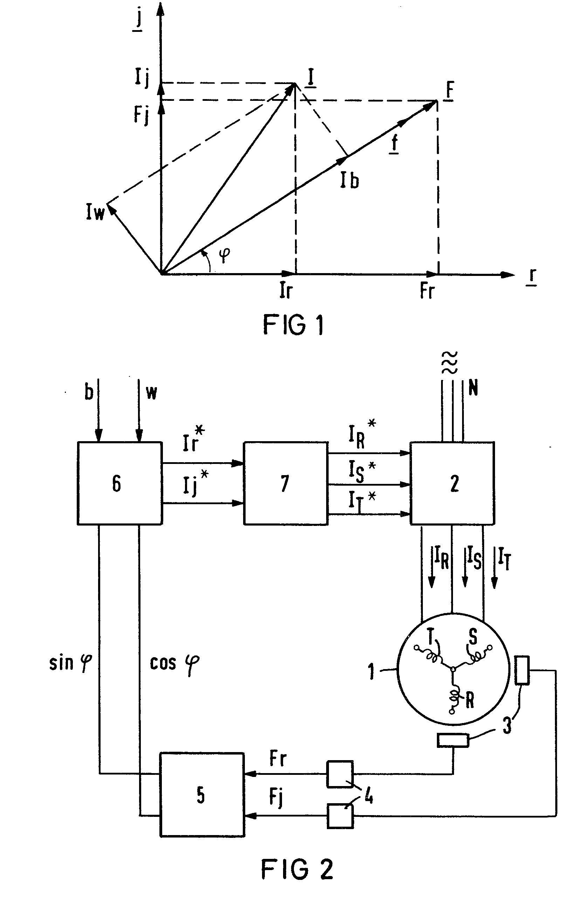

Eine derartige Steuerung oder Regelung einer Asynchronmaschine wird als «feldorientiert» bezeichnet und ist aus der DE-C-19 41 312 bekannt. Anhand eines in Figur 1 gezeigten Vektordiagrammes und eines Prinzipschaltbildes nach Figur 2 sei Arbeitsweise und Aufbau einer derartigen Anlage erläutert. Als Asynchronmaschine ist in Figur 2 ein dreiphasiger Asynchronmotor 1 mit den drei Ständer-Phasenwicklungen R, S, T dargestellt. Die Ständerwicklungen werden gespeist durch einen an ein Drehstromnetz N angeschlossenen Wechselrichter 2. Die Vektoren $\underline{r}$ und $\underline{j}$ in Figur 1 stellen ein orthogonales Koordinatensystem dar, dessen Ursprung in der Drehachse des Motors liegt und im Ständer fest vorgegeben ist, wobei der Vektor $\underline{r}$ parallel z.B. zur Wicklung gewählt ist. Der Ständerstrom, mit dem die Asynchronmaschine durch den Wechselrichter 2 gespeist wird, kann als Vektor $\underline{I}$ durch die ständerbezogenen Komponenten Ir und Ij dargestellt werden. Er rotiert im ständerbezogenen Koordinatensystem um den Koordinatenursprung, z.B. entgegen dem Uhrzeigersinn. Andererseits kann die momentane Lage des rotierenden magnetischen Feldes durch den in diesem Koordinatensystem rotierenden Vektor $\underline{F}$ des magnetischen Hauptflusses mit den Komponenten Fr und Fj wiedergegeben werden, wobei der Drehwinkel des Flussvektors $\underline{F}$ bezüglich des Bezugsvektors $\underline{r}$ mit $\varphi$ bezeichnet ist. Es kann nun ein feldorientiertes Koordinatensystem eingeführt werden. Als die eine Koordinate dieses feldorientierten Koordinatensystems kann der in Richtung des Flussvektors $\underline{F}$ zeigende Einheitsvektor $\underline{f}$ vorgegeben werden. Die beiden feldorientierten Komponenten des Ständerstromvektors sind mit Ib und Iw bezeichnet. Die Komponente Ib ist parallel zum jeweiligen Flussvektor und entspricht dem Erregerstrom einer Gleichstrommaschine, während die zum Flussvektor senkrechte Komponente Iw die das Drehmoment erzeugende Wirkstromkomponente ist und dem Ankerstrom einer Gleichstrommaschine entspricht.

Die Anordnung nach Figur 2 erlaubt eine Regelung oder Steuerung der Asynchronmaschine mit ähnlichen Eigenschaften wie bei einer Gleichstrommaschine, wenn die beiden Komponenten Ib und Iw unabhängig voneinander beeinflussbar sind. Dazu muss die relative Lage des jeweiligen Flussvektors bezüglich des ständerbezogenen Koordinatensystems , d.h. der Drehwinkel $\varphi$, erfasst werden. Dieser Winkel kann direkt durch induktive Messwertgeber, z.B. Hallsonden, erfasst werden. Der Winkel kann aber auch mittelbar berechnet werden, wenn die Spannung und der Strom an den Ständerwicklungseingängen erfasst wird. Gemäss Figur 2 werden die rechtwinkeligen ständerbezogenen Koordinaten Fr und Fj des Flussvektors $\underline{F}$ durch die induktiven Messwertgeber 3 erfasst und über eine Komponsierungseinrichtung 4 in einen Vektoranalysator 5 eingegeben. Wird der Betrag des Vektors $\underline{F}$ mit F bezeichnet, so gelten die Beziehungen

$$Fr = F \cos \varphi$$
$$Fj = F \sin \varphi \qquad (1)$$

Der Vektoranalysator 5 transformiert den durch Fr und Fj vorgegebenen Vektor in den Einheitsvektor $\underline{f}$ mit den ständerbezogenen Koordinaten $\cos \varphi$, $\sin \varphi$. Die Ausgangsgrössen des Vektoranalysators 5 sind die Komponenten $\cos\varphi$ und $\sin \varphi$ des in Richtung des Flussvektors zeigenden Einheitsvektors $\underline{f}$. Sie werden in einen Koordinatenwandler 6 eingegeben, der ferner von zwei Eingangsgrössen beaufschlagt ist, die als die Variablen b und w die feldorientierten Koordinaten eines Vektors darstellen. b dient als Soll-Magnetisierungsstromkomponente und w als Soll-Wirkstromkomponente des Ständerstromes. Mit Hilfe der beiden die jeweilige Lage des magnetischen Hauptflussvektors beschreibenden Ausgangsgrössen $\cos \varphi$ und $\sin \varphi$ überführt der Koordinatenwandler 6 in einer Koordinatentransformation die feldorientiert vorgegebenen Komponenten b und w in diejenigen Grössen Ir* und Ij* im ständerbezogenen Koordinatensystem, die für die Steuerung oder Regelung des Wechselrichters 2 benötigt werden. Mit der Eingangsgrösse b wird also nur die Magnetisierungsstromkomponente Ib und mit der anderen Eingangsgrösse w nur die das Drehmoment erzeugende Wirkstromkomponente Iw des Ständerstroms beeinflusst. Die Koordinatentransformation selber wird ausgeführt, wie man anhand des Vektordiagramms von Figur 1 erkennt, nach den Formeln

$$Ir^* = b \cdot \cos \varphi - w \cdot \sin \varphi$$
$$Ij^* = b \cdot \sin \varphi + w \cdot \cos \varphi. \qquad (2)$$

Da jedoch die Asynchronmaschine 1 und der Wechselrichter 2 für Drehstrom ausgelegt sind, werden diese Grössen Ir* und Ij* des ständerbezogenen Koordinatensystems (Achsen $\underline{r}$, $\underline{j}$, die am Ausgang des Koordinatenwandlers 6 anstehen, in einer Transformationsschaltung 7 in die ständerbezogenen Grössen $I_R^*$, $I_S^*$ und $I_T^*$ für die drei Achsen R, S, T der Ständerwicklung gemäss den Formeln umgewandelt:

$$I_R^* = Ir^*$$
$$I_S^* = - \tfrac{1}{2} Ir^* + \sqrt{3}/2 \; Ij^*$$
$$I_T^* = - \tfrac{1}{2} Ir^* - \sqrt{3}/2 \; Ij^* \qquad (3)$$

Entsprechend diesen drei Grössen $I_R^*$, $I_S^*$ und $I_T^*$ speist der Wechselrichter 2 die Asynchronmaschine mit den drei Ständerströmen $I_R$, $I_S$ und $I_T$. Folglich wird die Magnetisierungsstromkomponente Ib nur durch Veränderungen der Eingangsgrösse b und die Wirkstromkomponente Iw nur durch Änderungen der Eingangsgrösse w beeinflusst.

Der Aufbau der in Figur 2 gezeigten Elemente und eines Regelkreises für den Ständerstrom sind im einzelnen aus der erwähnten DE-C-19 41 312 bekannt.

Mit der bisher beschriebenen Einrichtung kann jedoch beim Startbeginn der Induktionsmaschine die Lage des Flussvektors nicht erfasst werden, da zunächst kein magnetischer Fluss induziert und daher auch die entsprechenden Signale nicht erfasst werden können, die nötig sind, um den Koordinatenwandler zu speisen. Folglich können Eingangsgrössen, die im feldbezogenen Koordinatensystem vorgegeben sind, nicht in das ständerbezogene System überführt werden. Daher ist eine Startvorrichtung erforderlich.

Es ist eine Startvorrichtung mit einem Zweiphasen-Oszillator denkbar (Solch ein Zweiphasengenerator ist aus DE-B-21 06 789 bekannt), dessen Ausgangssignale während des Startvorganges anstelle der Ausgangssignale des Vektoranalysators 5 dem Koordinatenwandler 6 zugeführt werden. Dadurch wird ein magnetischer Fluss in der Asynchronmaschine induziert und die Ausgangssignale des Zweiphasen-Oszillators können nun durch die Ausgangssignale des Vektoranalysators 5 ersetzt werden. Wenn jedoch in diesem Fall die Ausgangssignale des Zweiphasenoszillators nicht in ihrer Phase mit den Ausgangssignalen des Vektoranalysators 5 koinzidieren, werden Störungen in der Regelung erzeugt, die durch sprunghafte Änderungen unmittelbar nach dem Umschalten vom Zweiphasenoszillator auf den Vektoranalysator entstehen. Dies kann zu Fehlstarts führen. Um Phasenkoinzidenz zwischen den Signalen währen der Umschaltung zu erzeugen, wären dann zusätzliche aufwendige Schaltungen erforderlich.

Der Erfindung liegt die Aufgabe zugrunde, für eine Asynchronmaschine mit einer derartigen feldorientierten Regelung oder Steuerung eine einfache Startvorrichtung anzugeben, die zuverlässig ein sanftes Anlaufen der Asynchronmaschine ermöglicht.

Die Aufgabe wird gelöst durch die im Kennzeichen des Anspruchs 1 angegebenen Merkmale.

Mit dieser Startvorrichtung werden dem Koordinatenwandler zunächst Eingangsgrössen vorgegeben, die einer vorgegebenen Lage des Magnetflussvektors entsprechen. Diese Eingangsgrössen können als Gleichgrössen, d.h. Gleichstrom- oder Gleichspannungsgrössen, vorgegeben werden und machen die Verwendung eines Oszillators für die Starthilfe überflüssig. In dieser ersten Startphase, in der Gleichgrössen vorgegeben werden wird in der Asynchronmaschine ein magnetisches Feld erzeugt, dessen Hauptflussvektor die durch die vorgegebenen Eingangsgrössen bestimmte Lage einnimmt. Dabei beginnt noch kein Umlauf der Asynchronmaschine. Vielmehr beginnt der Umlauf der Asynchronmaschine nicht, bevor von den vorgegebenen Eingangsgrössen auf die Ausgangsgrössen der Flusserfassungseinrichtung umgeschaltet und die das Drehmoment bestimmende Wirkstromkomponente von der Begrenzung auf den Wert Null befreit wird. Auf dieser Weise ist ein zuverlässiges und sanftes Anlaufen mittels einer einfachen Startvorrichtung gesichert.

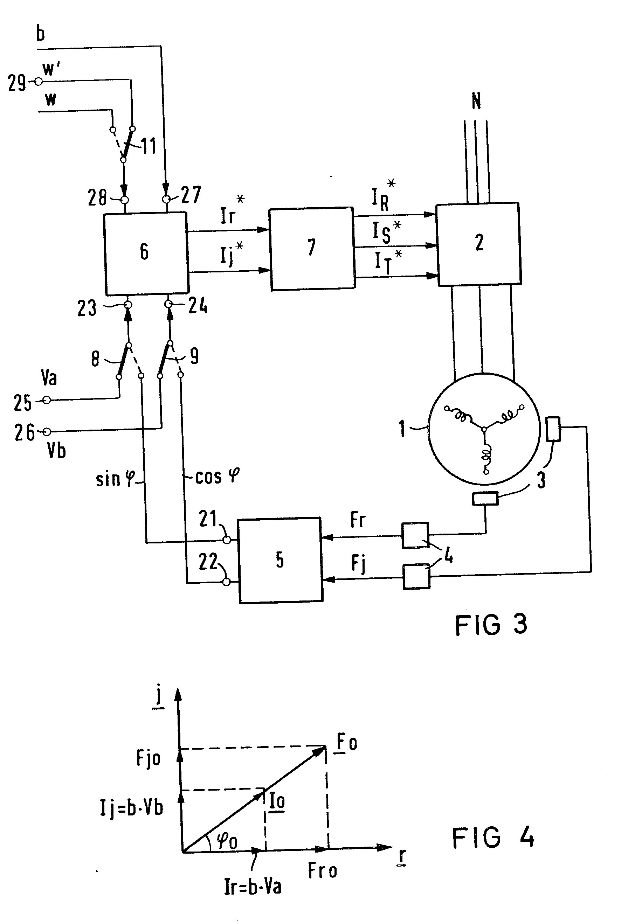

Anhand der Figuren 3 bis 5 wird die Erfindung näher erläutert.

Figur 3 zeigt ein Ausführungsbeispiel der Erfindung, wobei entsprechend Figur 2 mit 1 die Asynchronmaschine, mit 2 der Stromrichter mit zugehöriger Steuerung oder Regelung, mit 3, 4 und 5 die Elemente der Flusserfassungseinrichtung, mit 6 der Koordinatenwandler und mit 7 eine den Steuereingängen des Wechselrichters vorgeschaltete Transformationsschaltung bezeichnet ist.

Die Umschalteinrichtung besteht aus Umschaltern 8 und 9, die die Eingänge 23 und 24 des Koordinatenwandlers von den Ausgängen 21 und 22 des in der Flusserfassungseinrichtung vorgesehenen Vektoranalysators 5 auf Eingänge 25 und 26 legen. In der durch ausgezogene Linien dargestellten Schalterstellung werden Gleichspannungen Va und Vb als Eingangsgrössen an den Koordinatenwandler gelegt. Die Gleichspannungen Va und Vb können beliebig gewählt werden, falls

$\sqrt{Va^2 + Vb^2}$ gleich dem Betrag des Einheitsvektors $\underline{f}$ während des Umlaufes der Asynchronmaschine ist, d.h. falls gilt

$$\sqrt{Va^2 + Vb^2} = 1. \tag{4}$$

Über die Eingänge 27 und 28 werden dem Koordinatenwandler die Eingangsgrössen b und w vorgegeben. Für die Umschaltung ist jedoch ferner ein weiterer Umschalter 11 vorgesehen, der mit dem Koordinatenwandler-Eingang 28 für die Eingangsgrösse w verbunden ist. Bei der in Figur 3 durch eine ausgezogene Linie dargestellten Schalterstellung ist der Eingang 28 mit einer Eingangsklemme 29 verbunden, über die eine Eingangsspannung w' angelegt werden kann. Die Eingangsspannung w' wird im wesentlichen auf dem Wert Null gehalten.

Während des Startes werden die Schalter 8 bis 11 in der angegebenen Position gehalten. In diesem Fall sind die an den Ausgängen des Koordinatenwandlers anstehenden Grössen Ir* und Ij* durch die folgenden Gleichungen gegeben:

$$Ir^* = b \cdot Va$$
$$Ij^* = b \cdot Vb \tag{2'}$$

wobei nach (2) von den Beziehungen w = w' = 0, cos $\varphi$ = Va und sin $\varphi$ = Vb Gebrauch gemacht wird. Die beiden Komponenten Ir und Ij des Ist-Ständerstromes sind zeitlich konstant, da sie auf den durch diese Formeln angegebenen Sollwerten gehalten werden. So wird der Ständerstromvektor zu einem räumlich feststehenden Vektor Io mit dem Betrag b und dem Winkel $\varphi o = \tan^{-1}$ (Va/Vb). Da der Ständerstromvektor $\underline{I}o$ nicht umläuft,

läuft auch die Asynchronmaschine 1 nicht an, so dass der Flussvektor $\underline{F}$ in der Asynchronmaschine in dieser Anlaufphase ein feststehender räumlicher Vektor $\underline{F}o$ wird, der im wesentlichen die gleiche Richtung hat wie der nichtumlaufende Ständerstromvektor. In diesem Fall (Figur 4) sind die Spannungen Va und Vb so gewählt, dass sie die obige Gleichung 4 erfüllen, z.B. Va = cos 30° = $\sqrt{3/2}$ und Vb = sin 30° = $^1/_2$. Das Vektordiagramm der Asynchronmaschine ist dann durch Figur 4 gegeben. Es kann dabei Ib = Io und Iw = 0 gewählt werden.

Wenn nun die Umschalter 8 bis 11 in die andere Lage, die durch gestrichelte Linien dargestellt ist, umgelegt werden, werden die auf die Eingänge 23 und 24 des Koordinatenwandlers 6 aufzuschaltende Signale nicht plötzlich verändert, sondern die Wirkleistungskomponente des Ständerstroms wird durch Anheben der vorgegebenen Grösse w erzeugt, so dass ein sanftes Anlaufen ohne Fehlstart möglich ist. Vorteilhaft wird die Anstiegsgeschwindigkeit für die Eingangsgrösse w innerhalb zweckmässiger Grenzen beschränkt.

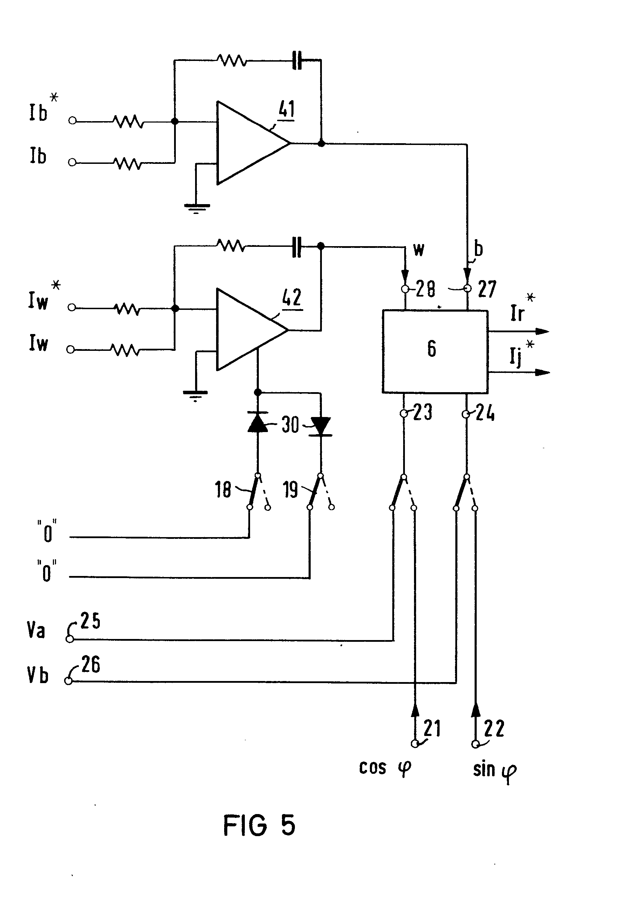

Soll für die Magnetisierungsstromkomponente Ib und die Wirkstromkomponente Iw eine Stromregelung erfolgen, so kann dies auf die in Figur 5 gezeigte Weise durch einen Regelverstärker geschehen, der den Eingängen 27, 28 für die feldorientierten Eingangsgrössen w, b angeschlossen ist. Die am Eingang 27 des Koordinatenwandlers 6 einzugebende vorgegebene Grösse b wird von einem Magnetisierungsstrom-Regelverstärker 41 geliefert, der den Istwert Ib der Magnetisierungsstromkomponente auf den Sollwert Ib* regelt. Dieser Sollwert Ib* wird über einen Eingabeeingang oder von einen (nicht dargestellten) Verstärker zur Begrenzung der veränderlichen Ausgangsgrösse vorgegeben werden. Ferner wird die am Eingang 28 des Koordinatenwandlers 6 einzuspeisende vorgegebene Grösse w von einem Wirkstrom-Regelverstärker 42 geliefert, der den Istwert der Wirkstromkomponente Iw auf den vorgegebenen Sollwert Iw* regelt. Dieser Sollwert Iw* kann ebenfalls an einem Eingabeeingang oder an einem Verstärker zur Begrenzung des veränderlichen Ausgangssignales abgegriffen werden. Die beiden Stromregler 41 und 42 sind als PI-Regler ausgeführt. Einzelheiten der Schaltung sind aus der erwähnten deutschen Patentschrift 19 41 312 bekannt.

Darüberhinaus kann als Teil der Startvorrichtung nach der Erfindung der Wirkstrom-Regelverstärker 42 mit Dioden beschaltet sein, um die Wirkstromkomponente auf den Wert «0» zu begrenzen. Durch Aufschaltung der Spannung «0» als Begrenzung für den Reglerausgang wird bei den in Figur 5 in ausgezogenen Linien dargestellten Schalterstellungen der Schalter 18 und 19 die Ausgangsspannung des Regelverstärkers 42 (d.h. die vorgegebene Grösse w) zur Vorbereitung des Anlaufes vorübergehend auf Null gehalten. Die den Eingängen 23 und 24 des Koordinatenwandlers 6 vorgeschalteten Umschalter 8 und 9 sind entsprechend Figur 3 ausgeführt.

Zu Beginn des Anlaufes liegen die Schalter 8, 9, 18 und 19 in der ausgezogen dargestellten Stellung und der Sollwert Ib* wird mit einer passenden Geschwindigkeit vom Wert 0 auf den gewünschten Wert hochgefahren. Dabei wird die Bedingung Iw* = 0 eingehalten, so dass der Vektor $\underline{F}o$ des anfangs erregten magnetischen Feldes, der dabei im ständerbezogenen Koordinatensystem räumlich fixiert ist, auf die gleiche Weise gebildet wird wie im Zusammenhang mit Figur 3 bereits beschrieben wurde. Nachdem der Sollwert Ib* den gewünschten Endwert erreicht hat, liegt ein stationärer Zustand vor, entsprechend Ib = Ib*, cos φ = Va, sin φ = Vb. Selbst wenn zu diesem Zeitpunkt durch geringfügige Störungen Iw von dem vorgegebenen Wert Iw* = 0 abweicht, ist das Ausgangssignal w des Regelverstärkers 42 auf dem Wert 0 durch die Schalter 18 und 19 gehalten. Nachdem dieser stationäre Zustand erreicht ist, werden die Schalter 8, 9, 18 und 19 in die gestrichelt dargestellte Position umgelegt. Da zu diesem Zeitpunkt die Beziehung cos φ = Va und sin φ = Vb vorliegen, wird durch diese Umschaltung keine plötzliche Änderung hervorgerufen. Da aber der Regler 42 nunmehr von der Begrenzung seines Ausganges auf den Wert 0 gelöst und freigegeben wird, kann der Istwert Iw der Wirkstromkomponente durch Hochfahren des Sollwertes Iw* mit einer passenden Geschwindigkeit angehoben werden, so dass die Asynchronmaschine zuverlässig und sanft anlaufen kann.

Entsprechend diesen Erläuterungen kann gemäss der Erfindung ein zuverlässiger und sanfter Start der Asynchronmaschine durch eine bemerkenswert einfache Startvorrichtung, die im wesentlichen aus Umschaltern und einer geeigneten Vorgabe von Gleichspannungswerten gebildet wird, erreicht werden.

**Patentanspruch**

Startvorrichtung (8, 9, 11, 25, 26, 29) für eine gesteuerte oder geregelte Asynchronmaschine (1), bei der die Ständerwicklung von einem steuerbaren Stromrichter (2) gespeist ist und die feldorientierte Steuerung oder Regelung enthält:

a) eine Flusserfassungseinrichtung (3, 4, 5), die der jeweiligen Lage des magnetischen Hauptflussvektors (Fr, Fj) der Asynchronmaschine, bezogen auf einen im Ständer ortsfest festgelegten Bezugsvektor, entsprechende Ausgangsgrössen (cos φ, sin φ) bildet und

b) einen von den Ausgangsgrössen der Flusserfassungseinrichtung (3, 4, 5) beaufschlagten Koordinatenwandler (6), der zwei den Komponenten eines vorgegebenen Vektors, bezogen auf die jeweilige Lage des Hauptflussvektors, entsprechende Eingangsgrössen (b, w) in derartige Steuergrössen ($I_R^*$, $I_S^*$, $I_T^*$) für den Stromrichter umwandelt, dass bei einer Änderung der einen Komponente (b) des vorgegebenen Vektors nur die zum Hauptflussvektor parallele Komponente (Ib) des Ständerstroms und mit der anderen Komponente (w) nur die dazu senkrechte Komponente (Iw) des

Ständerstroms beeinflusst wird, gekennzeichnet durch eine Umschalteinrichtung (8, 9, 11), durch die der Koordinatenwandler (6) vor dem Start der Asynchronmaschine vorübergehend anstelle der Ausgangsgrössen (cos φ, sin φ) der Flusserfassungseinrichtung (3, 4, 5) mit Grössen (Va, Vb) beaufschlagt wird, die einer vorgegebenen Lage des Hauptflussvektors entsprechen, und durch die ferner diejenige Eingangsgrösse (w), die die zum Hauptflussvektor senkrechte Komponente (Iw) des Ständerstroms beeinflusst, auf einen Wert (w′ = 0) gehalten wird, durch den die zum Hauptflussvektor senkrechte Komponente des Ständerstroms auf den Wert Null begrenzt wird.

**Revendications**

Dispositif de démarrage (8, 9, 11, 25, 26, 29) pour une machine asynchrone (1) commandée ou régulée, dans lequel l'enroulement statorique est alimenté par un convertisseur de courant (2) réglable et comportant la commande ou la régulation, suivante, orientée en fonction du champ:
a) un dispositif de détection du flux (3, 4, 5) qui forme des grandeurs de sortie (cos φ, sin φ) qui correspondent à la position du vecteur du flux magnétique principal (Fr, Fj) de la machine asynchrone, rapporté à un vecteur de référence de position déterminée fixe dans le stator, et
b) un convertisseur de coordonnées (6) chargé par le dispositif de détection du flux (3, 4, 5) et transformant deux grandeurs (b, w) correspondant aux composantes d'un vecteur prédéterminé, rapportés à la position du vecteur du flux magnétique principal, en de telles grandeurs de commande ($I_R^*$, $I_S^*$, $I_T^*$) pour le convertisseur de courant que lors d'une modification de l'une des composantes (b) du vecteur prédéterminé seule est influencée la composante (Ib) du courant statorique qui est parallèle au vecteur du flux principal, alors qu'avec l'autre composante (w) seule est influencée la composante (Iw) du courant statorique qui lui est parallèle, caractérisé par un dispositif de commutation (8, 9, 11) au moyen duquel le convertisseur de coordonnées (6) est chargé passagèrement, avant le démarrage de la machine asynchrone et à la place des grandeurs de sortie (cos φ, sin φ) du dispositif de détection du flux, avec des grandeurs (Va, Vb) qui correspondent à une position prédéterminée du vecteur du flux principal et avec lesquelles la grandeur d'entrée (w) qui influence la composante (Iw) du courant statorique qui est perpendiculaire au vecteur du flux principal est maintenue à une valeur (w′ = 0) à l'aide de laquelle la composante du courant statorique qui est perpendiculaire au vecteur de flux principal est limitée à la valeur nulle.

**Claims**

1. Start device (8, 9, 11, 25, 26, 29) for a controlled or regulated asynchronous machine (1) wherein the stator winding is fed by a controllable rectifier (2) and the field orientated control or regulation unit contains:
a) a flux detective device (3, 4, 5) which forms output values (cosφ, sinφ) corresponding to the particular position of the magnetic main flux vector (Fr, Fj) of the asynchronous machine relative to a stationary reference vector in the stator and
b) a co-ordinate converter (6) which is supplied with the output values from the flux detection device (3, 4, 5) and which converts two input values (b, w) which correspond to the components of a predetermined vector relative to the particular position of the main flux vector into control values ($I_R^*$, $I_S^*$, $I_T^*$) for the rectifier which are such that in the event of a change in one component (b) of the predetermined vector, only that component (Ib) of the stator current which is parallel to the main flux vector is influenced, and in the case of the other component (w) only that component (Iw) of the stator current which is perpendicular thereto is influenced, characterized by a swither-over device (8, 9, 11) by means of which, prior to the start of the asynchronous machine, the co-ordinate con-verter (6) is supplied temporarily not with the output values (cos φ, sin φ) of the flux detection device (3, 4, 5), but with values (Va, Vb) which correspond to a predetermined position of the main flux vector and which moreover keep that input value (w) which influences the component (Iw) of the stator current which is perpendicular to the main flux vector at a value (w′ = 0) which serves to limit to zero the component of the stator current which is perpendicular to the main flux vector.

FIG 1

FIG 2

FIG 3

FIG 4

FIG 5